# EUROPÄISCHE PATENTSCHRIFT

(11) **EP 1 651 489 B1**
(45) Veröffentlichungstag und Bekanntmachung des Hinweises auf die Patenterteilung: **18.07.2007**
(21) Anmeldenummer: 04740909.9
(22) Anmeldetag: 12.07.2004
(51) Int. Cl.: B60T 13/26, B60T 17/02

(54) **ELEKTRONISCHE DRUCKLUFTANLAGE**
ELECTRONIC COMPRESSED-AIR SYSTEM
SYSTEME ELECTRONIQUE A AIR COMPRIME

(30) Priorität: 28.07.2003 DE 10334319; 10.12.2003 DE 10357763
(43) Veröffentlichungstag der Anmeldung: 03.05.2006
(73) Patentinhaber: WABCO GmbH, 30453 Hannover (DE)
(72) Erfinder: DIEKMEYER, Heinrich, 30890 Barsinghausen (DE); BORNHOF, Hans-Ulrich, 30938 Burgwedel (DE); LIPPELT, Frank-Dietmar, 30890 Barsinghausen (DE)
(74) Vertreter: Günther, Constantin
(86) Internationale Anmeldenummer: PCT/EP2004/007649
(87) Internationale Veröffentlichungsnummer: WO 2005/014357

(56) Entgegenhaltungen:
- EP-A- 0 810 136
- WO-A-98/47751
- DE-A- 19 515 895

## Beschreibung

Die Erfindung betrifft eine elektronische Druckluftanlage für Fahrzeuge gemäß Oberbegriff des Anspruchs 1.

Durch die WO 98/47751 A1 ist ein pneumatisches Fahrzeug-Bremssystem bekannt, das einen Kompressor, wenigstens einen Luftverbraucherkreis (beispielsweise Betriebsbremskreise) einen Parkbremskreis, einen Niederdruck-Hilfskreis und einen Hochdruckkreis aufweist, wobei die Kreise Druckluftbehälter und Bedarfsventile aufweisen. Zwischen dem Kompressor und wenigstens dem einen Verbraucherkreis befinden sich erste, im Grundzustand (stromlos) geschlossene, elektrisch betätigbare Ventile und zwischen dem Kompressor und dem Hilfskreis ein zweites im Grundzustand (stromlos) offenes, elektrisch betätigbares Ventil. Die Ventile werden von einer elektronischen Steuereinheit betätigt. Die Ausgangsanschlüsse der ersten Ventile der Luftverbraucherkreise sind über Rückschlagventile mit dem Ausgangsanschluss des zweiten normalerweise offenen Ventils verbunden. Sollte Druckluftbedarf in einem der Kreise bestehen, beispielsweise bedingt durch zu niedrigen Behälterdruck, wird das entsprechende Ventil durch die Steuereinheit aufgesteuert, wodurch der Luftbedarf vom Kompressor gedeckt wird, wobei gleichzeitig das zweite Ventil des Hilfskreises geschlossen wird. Ein Ausfall des Kompressors führt zu einem Druckabfall, der von der Steuereinheit erkannt wird, die die Ventile schließt bzw. geschlossen hält, wodurch der Druck in den Kreisen gehalten wird. Ein Druckregelventil bestimmt die Druckhöhe. Bei Ausfall des Druckregelventils wird Über-druck durch ein Überdruckventil abgelassen. Drucksensoren überwachen die Kreise. Über das zweite normalerweise offene Ventil und über den Kreisen vorgeschaltete Rückschlagventi-le werden die Kreise mit Luft versorgt. Fällt das elektri-sche System aus, schalten alle Ventile in den Grundzustand. Der Kompressor läuft trotzdem und versorgt die Kreise über das zweite normalerweise offene Ventil des Hilfskreises mit Luft, wobei der Systemdruck durch ein Niederdruckablass-ventil des Hilfskreises bestimmt wird. Fällt ein Ventil aus, kann der zugeordnete Kreis über das Ventil des Hilfs-kreises und das Rückschlagventil mit Luft versorgt werden. Das bekannte System ist aufwendig, da jeder Verbraucher-kreis mit einem eigenen Druckluftbehälter ausgestattet ist.

Die Aufgabe daher vorliegenden Erfindung besteht darin, eine Druckluftanlage der eingangs genannten Art so auszubilden, dass weitestgehend auf Druckluftbehälter verzichtet werden kann.

Diese Aufgabe wird durch die Erfindung gemäß Anspruch 1 gelöst.

Vorteilhafte und zweckmäßige Ausgestaltungen der erfindungsgemäßen Aufgabenlösung sind in den Unteransprüchen angegeben.

Durch die erfindungsgemäß ausgebildete Druckluftanlage ergeben sich Kosteneinsparungen, weil auf sämtliche Druckluftbehälter mit Ausnahme der Behälter für die Betriebsbremskreise verzichtet werden kann. Trotzdem sind mehrere Druckstufen realisierbar.

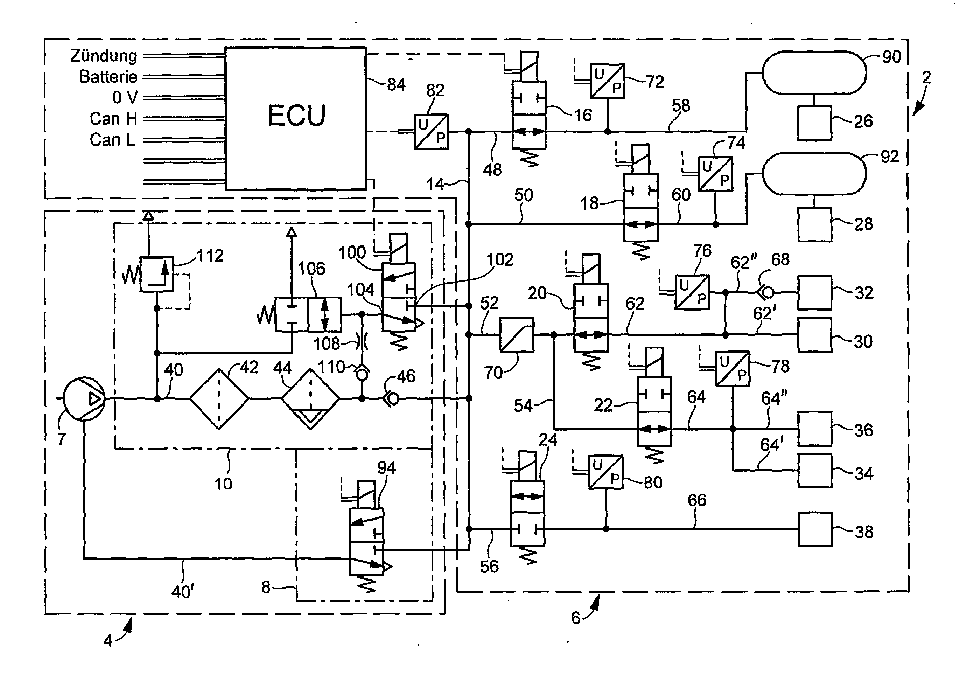

Die Erfindung soll nachfolgend anhand der beigefügten Zeichnung, die ein Ausführungsbeispiel einer erfindungsgemäßen Druckluftanlage zeigt, näher erläutert werden.

Druckmittelleitungen sind in der Zeichnung durchgezogene Linien, elektrische Leitungen sind gestrichelte Linien.

Die Zeichnung zeigt eine Druckluftanlage 2 mit einem Druckluftversorgungsteil 4 und einem Verbraucherteil 6. Der Druckluftversorgungsteil 4 umfasst einen Kompressor 7, eine Kompressor - Steuereinrichtung 8 und ein Lufttrocknerteil 10.

Der Verbraucherteil 6 weist eine Druckluftverteilerleitung 14, mehrere elektrisch betätigbare Ventile, vorzugsweise Magnetventile 16, 18, 20, 22, 24 mit Rückstellfeder und mehrere über die Magnetventile mit Druckluft versorgte Verbraucherkreise 26, 28, 30, 32, 34, 36, 38 auf.

Vom Kompressor 7 führt eine Druckluftversorgungsleitung 40 über ein Filter 42, einen Lufttrockner 44 und ein Rückschlagventil 46 zur Verteilerleitung 14, von der zu den Magnetventilen führende Leitungen 48, 50, 52, 54, 56 abzweigen. Von den Magnetventilen führen Druckluftleitungen 58, 60, 62, 64, 66 zu den Verbraucherkreisen. Die Leitung 62 verzweigt sich in zu den Kreisen 30 und 32 führenden Leitungen 62', 62", wobei in der Leitung 62" noch ein Rückschlagventil 68 angeordnet ist. In der Versorgungsleitung 52 ist ein Druckbegrenzer 70 angeordnet. Hinter dem Druckbegrenzer 70 zweigt die zum Magnetventil 22 führende Leitung 54 ab. Die Leitung 64 verzweigt sich in zu den Kreisen 34 und 36 führenden Leitungen 64' und 64".

Drucksensoren 72, 74, 76, 78, 80, 82 überwachen den Druck in den Verbraucherkreisen und in der Verteilerleitung 14 und geben den jeweiligen Druck als Drucksignal an eine elektronische Steuereinheit 84, die die Magnetventile steuert.

Die Verbraucherkreise 26, 28 können beispielsweise Betriebsbremskreise sein. Der Verbraucherkreis 30 kann ein Anhängerbremskreis sein, wobei normalerweise zwei Leitungen, eine Versorgungs- und eine Bremsleitung, zum Anhänger führen. Der Verbraucherkreis 32 kann ein Feststellebremskreis mit Federspeicher sein. Die Verbraucherkreise 34 und 36 können Nebenverbrauchskreise, wie Fahrerhausfederung, Türsteuerung etc., d.h. alles was nichts mit den Bremskreisen zu tun hat, sein. Der Verbraucherkreis 38 kann ein Hochdruckkreis sein.

Die Betriebsbremskreise 26, 28 weisen Druckluftbehälter 90, 92 entsprechend den Richtlinien 98/12/ EG auf.

Die erfindungsgemäße Druckluftanlage ermöglicht, auf Druckluftbehälter in den Kreisen 30, 32, 34, 36 und auch im Hochdruckkreis 38 zu verzichten. Es ist z.B. zulässig, andere Verbraucherkreise aus den Betriebsbremskreisen (Kreise 26 und 28) zu versorgen, wenn die Bremsfunktion oder Bremswirkung der Betriebsbremskreise 26 und 28 nicht beeinträchtigt wird.

Der Kompressor 7 wird von der Kompressorsteuerung 8 mechanisch (pneumatisch) über eine Leitung 40' gesteuert. Die Kompressorsteuerung 8 umfasst ein durch die elektro-nische Steuereinheit 84 schaltbares Magnetventil 94 mit kleiner Nennweite, das im stromlosen Grundzustand, wie dargestellt, entlüftet ist, wodurch der Kompressor 7 eingeschaltet ist. Wenn der Kompressor 7 ausgeschaltet werden soll, weil beispielsweise sämtliche Verbraucherkreise mit Druckluft aufgefüllt sind, schaltet die Steuereinheit 84 das Magnetventil 94 um, so dass der druckbetätigbare Kompressor über die Leitung 40' ausgeschaltet wird. Wird das Magnetventil 94, weil beispielsweise ein Verbraucherkreis Druckluft nach dem Auffüllen benötigt, stromlos geschaltet, wird das Magnetventil 94 in den in der Zeichnung dargestellten Grundzustand geschaltet, wodurch die Leitung 40' entlüftet wird, so dass der Kompressor 7 eingeschaltet wird.

Der Lufttrocknerteil 10 umfasst ein Magnetventil 100 mit kleiner Nennweite, dessen Eingang 102 mit der Verteilerleitung 14 verbunden ist und über dessen Ausgang 104 ein Abschaltventil 106 pneumatisch geschaltet wird, das mit der Versorgungsleitung 40 des Kompressors 7 verbunden ist und zum Entlüften des Lufttrockners dient.

Wenn das Magnetventil 100 durchgeschaltet ist, fördert der Kompressor 7 nicht mehr in die Verbraucherkreise, sondern über das Ventil 106 ins Freie. Gleichzeitig strömt trockene Luft aus der Verteilerleitung 14 (aus den Behältern 90, 92 der Betriebsbremskreise) über das Magnetventil 100 über eine Drossel 108 und ein Rückschlagventil 110 durch den Lufttrockner 44 zur Regeneration seines Trockenmittels und weiter über den Filter 42 und das Ventil 106 ins Freie.

Das Bezugszeichen 112 bezeichnet ein Überdruckventil.

Die Magnetventile 16, 18, 20, 22, 24 werden von der Steuereinheit 84 gesteuert, wobei die Magnetventile 16 bis 22 der Verbraucherkreise 26 bis 34 im stromlosen Grundzustand offen sind, während das Magnetventil 24 des Hochdruckkreises im stromlosen Grundzustand geschlossen ist. Es können auch vorgesteuerte Magnetventile eingesetzt werden. Der Druck in den Kreisen wird unmittelbar an den Magnetventilen überwacht durch die Drucksensoren 72, 74, 76, 78, 80.

Sollte in einem Verbraucherkreis bei nicht betätigten Magnetventilen, beispielsweise im Kreis 30 (Anhängerbremskreis) der Druck absinken, erfolgt die Druckluftversorgung durch die Betriebsbremskreise 26 und 28 aus deren Druckluftbehältern 90, 92 über die offenen Magnetventile 16, 18, 20. Es ist somit möglich, Druckbehälter bei den Verbraucherkreisen (außer bei den Betriebsbremskreisen) einzusparen. Außerdem verringert sich die Schalthäufigkeit der Magnetventile. Der Druck in den Verbraucherkreisen 30 bis 36 wird durch den Druckbegrenzer 70 auf ein niedrigeres Niveau, beispielsweise 8,5 bar, als das Druckniveau, beispielsweise 10,5 bar, der Betriebsbremskreise eingestellt.

Der Hochdruckkreis 38 ist abgesperrt und steht somit nicht mit den übrigen Kreisen in Verbindung. Der Hochdruckkreis weist in der Regel einen höheren Druck als die anderen Verbraucherkreise, beispielsweise 12,5 bar, auf.

Wenn man den Behälter im Hochdruckkreis 36, wie dargestellt, weglässt, hat man nur die Behältervolumina der Betriebsbremskreise und ein kleines Totvolumen bei den anderen Nebenverbrauchern. Wenn dann eine kleine Leckage im Hochdruckkreis auftritt, müsste normalerweise über das Magnetventil 24 häufig geregelt werden. Der entsprechende Regelalgorithmus ist wegen der üblicherweise großen Nennweite des Magnetventils 24 kompliziert, so dass man das Magnetventil nur dann öffnen möchte, wenn der Hochdruckkreis wirklich Druckluft benötigt. Diese Information über den durch den Drucksensor 80 festgestellten Druckluftbedarf des Hochdruckventils könnte über eine CAN-Datenleitung an die Steuereinheit 84 gegeben werden, die dann das Ventil 24 aufsteuert und den Kompressor 7 über das Magnetventil 94 einschaltet zur Druckluftzufuhr zum Hochdruckkreis 38 aus den Bremskreisen 26, 28 und durch den Kompressor 7.

Der Hochdruckkreis 38 hat ein anderes Druckniveau als die weiteren Verbraucherkreise; er braucht aber relativ selten mit Druckluft nachgefüllt zu werden und ist daher normalerweise durch das im Grundzustand stromlose geschlossene Magnetventil 24 abgesperrt. Er benötigt auch nicht bei Bedarf innerhalb sehr kurzer Zeit (msec oder Bruchteilen von Sekunden) seine Druckluft, so dass man eine gewisse Totzeit in Kauf nehmen kann für die Kommunikation mit der Steuereinheit und für die Steuerung des Magnetventils 24. Der Hochdruckkreis wird daher erfindungsgemäß normal geschlossen gehalten. Die Kreise 30, 32, 34, 36, werden aus den Behältern 90 und 92 der Betriebsbremskreise 26 und 28 über die während der normalen Fahrt stromlos offenen Ventile 16, 18, 20, 22 versorgt.

## Patentansprüche

1. Elektronische Druckluftanlage für Fahrzeuge zur Versorgung von Druckluftkreisen mit Druckluft mit einem einen Kompressor aufweisenden Druckluftversorgungsteil und einem Verbraucherteil mit mehreren Druckluftverbraucherkreisen, die über elektrisch betätigbare Ventile mit Druckluft versorgt werden und von denen wenigstens ein Verbraucherkreis einen Druckluftspeicher aufweist, wobei der Druck in den Verbraucherkreisen durch Drucksensoren überwacht wird, deren elektrische Drucksignale von einer elektronischen Steuereinheit ausgewertet werden, die die elektrisch betätigbaren Ventile steuert, **dadurch gekennzeichnet, dass** die Druckluftverbraucherkreise Betriebsbremskreise (26,28) mit wenigstens einem Druckluftspeicher (90,92), wenigstens einen Nebenverbraucherkreis (30, 32, 34,36) ohne Druckluftspeicher und einen Hochdruckkreis (38) ohne oder mit Druckluftspeicher aufweisen, wobei die elektrisch betätigbaren Ventile (16,18) der Betriebsbremskreise und die elektrisch betätigbaren Ventile (20,22) der Nebenverbraucherkreise (30,32, 34,36) im stromlosen Grundzustand offen sind und das elektrisch betätigbare Ventil (24) des Hochdruckkreises (38) im stromlosen Grundzustand geschlossen ist.

2. Druckluftanlage nach Anspruch 1, **dadurch gekennzeichnet, dass** die elektrisch betätigbaren Ventile Magnetventile sind.

3. Druckluftanlage nach Anspruch 1, **dadurch gekennzeichnet, dass** das Druckniveau in den Nebenverbrauchskreisen (30,32, 34,36) kleiner ist als das Druckniveau in den Betriebsbremskreisen (26,28).

4. Druckluftanlage nach Anspruch 1, **dadurch gekennzeichnet, dass** das Druckniveau im Hochdruckkreis (38) größer ist als das Druckniveau in den Betriebsbremskreisen (26,28).

5. Druckluftanlage nach Anspruch 1 oder 2, **dadurch gekennzeichnet, dass** den Magnetventilen (20,22) der Nebenverbraucherkreise (30,32,34,36) ein Druckbegrenzungsventil (70) vorgeschaltet ist.

6. Druckluftanlage nach Anspruch 1, **dadurch gekennzeichnet, dass** die Magnetventile (16,18, 20, 22,24) des Verbraucherteils (6) an eine gemeinsame Druckluftverteilerleitung (14) angeschlossen sind, an die eine Druckluftversorgungsleitung (40) angeschlossen ist.

7. Druckluftanlage nach Anspruch 6, **dadurch gekennzeichnet, dass** in der Druckluftversorgungsleitung(40) ein Lufttrockner (44) und ein Rückschlagventil(46) angeordnet sind.

8. Druckluftanlage nach Anspruch 1, **dadurch gekennzeichnet, dass** wenigstens ein Druckluftverbraucherkreis über ein Datenbus mit der elektronischen Steuereinheit (84) kommuniziert.

## Claims

1. Electronic compressed air system for vehicles for supplying compressed air circuits with compressed air, having a compressed air supply part, which has a compressor, and a consumer part having a plurality of compressed air consumer circuits which are supplied with compressed air by means of electrically actuatable valves and of which at least one consumer circuit has a compressed air storage means, the pressure in the consumer circuits being monitored by pressure sensors, the electrical pressure signals of which are evaluated by an electronic control unit that controls the electrically actuatable valves, **characterized in that** the compressed air consumer circuits have service brake circuits (26,28) with at least one compressed air storage means (90,92), at least one secondary consumer circuit (30,32, 34,36) without compressed air storage means and a high-pressure circuit (38) without or with compressed air storage means, the electrically actuatable valves (16,18) of the service brake circuits and the electrically actuatable valves (20,22) of the secondary consumer circuits (30,32, 34,36) being open in the de-energized normal state and the electrically actuatable valve (24) of the high-pressure circuit (38) being closed in the de-energized normal state.

2. Compressed air system according to claim 1, **characterized in that** the electrically actuatable valves are solenoid valves.

3. Compressed air system according to claim 1, **characterized in that** the pressure level in the secondary consumer circuits (30,32, 34,36) is less than the pressure level in the service brake circuits (26,28).

4. Compressed air system according to claim 1, **characterized in that** the pressure level in the high-pressure circuit (38) is greater than the pressure level in the service brake circuits (26,28).

5. Compressed air system according to claim 1 or 2, **characterized in that** a pressure limitation valve (70) is arranged upstream of the solenoid valves (20,22) of the secondary consumer circuits (30,32, 34,36).

6. Compressed air system according to claim 1, **characterized in that** the solenoid valves (16,18, 20, 22,24) of the consumer part (6) are connected to a common compressed air distributor line (14), to which a compressed air supply line (40) is connected.

7. Compressed air system according to claim 6, **characterized in that** an air drier (44) and a non-return valve (46) are arranged in the compressed air supply line (40).

8. Compressed air system according to claim 1, **characterized in that** at least one compressed air consumer circuit communicates with the electronic control unit (84) by means of a data bus.

## Revendications

1. Système électronique à air comprimé pour des véhicules afin d'alimenter les circuits à air comprimé en air comprimé comportant une partie d'alimentation en air comprimé présentant un compresseur et une partie consommatrice comportant plusieurs circuits consommateurs d'air comprimé, qui sont alimentés en air comprimé par l'intermédiaire de soupapes pouvant être commandées électriquement et parmi lesquels au moins un circuit consommateur présente un accumulateur d'air comprimé, dans lequel la pression dans les circuits consommateurs est surveillée par des capteurs de pression, dont les signaux de pression électrique sont évalués par une unité de commande électronique, qui commande les soupapes pouvant être commandées électriquement, **caractérisé en ce que** les circuits consommateurs d'air comprimé présentent des circuits de frein de service (26, 28) comportant au moins un accumulateur d'air comprimé (90, 92), au moins un circuit consommateur annexe (30, 32, 34, 36) sans accumulateur d'air comprimé et un circuit à haute pression (38) sans ou avec un accumulateur d'air comprimé, dans lequel les soupapes pouvant être commandées électriquement (16, 18) des circuits de frein de service et les soupapes pouvant être commandées électriquement (20, 22) des circuits consommateurs annexes (30, 32, 34, 36) sont ouvertes dans l'état fondamental sans courant et la soupape pouvant être commandée électriquement (24) du circuit à haute pression (38) est fermée dans l'état fondamental sans courant.

2. Système à air comprimé selon la revendication 1, **caractérisé en ce que** les soupapes pouvant être commandées électriquement sont des électrovannes.

3. Système à air comprimé selon la revendication 1, **caractérisé en ce que** le niveau de pression dans les circuits consommateurs annexes (30, 32, 34, 36) est inférieur au niveau de pression dans les circuits de frein de service (26, 28).

4. Système à air comprimé selon la revendication 1, **caractérisé en ce que** le niveau de pression dans le circuit à haute pression (38) est supérieur au niveau de pression dans les circuits de frein de service (26, 28).

5. Système à air comprimé selon la revendication 1 ou 2, **caractérisé en ce qu'**une soupape de limitation de pression (70) est placée en amont des électrovannes (20, 22) des circuits consommateurs annexes (30, 32, 34, 36).

6. Système à air comprimé selon la revendication 1, **caractérisé en ce que** les électrovannes (16, 18, 20, 22, 24) de la partie consommatrice (6) sont reliées à une conduite de distribution d'air comprimé commune (14), à laquelle une conduite d'alimentation en air comprimé (40) est reliée.

7. Système à air comprimé selon la revendication 6, **caractérisé en ce qu'**un dessiccateur d'air (44) et un clapet anti-retour (46) sont disposés dans la conduite d'alimentation en air comprimé (40).

8. Système à air comprimé selon la revendication 1, **caractérisé en ce qu'**au moins un circuit consommateur d'air comprimé communique par l'intermédiaire d'un bus de données avec une unité de commande électronique (84).
